# EUROPÄISCHE PATENTANMELDUNG

(11) **EP 0 768 348 A2**
(43) Veröffentlichungstag der Anmeldung: **16.04.1997**
(21) Anmeldenummer: 96115245.1
(22) Anmeldetag: 23.09.1996
(51) Int. Cl.: C09D 4/06, C08F 283/10, C09D 163/00

(54) **Wässrige Beschichtungsmittel auf der Basis lösemittelarmer modifizierter Epoxidharz-Dispersionen**

(30) Priorität: 29.09.1995 DE 19536380
(71) Anmelder: Vianova Resins GmbH, 55252 Mainz-Kastel (DE)
(72) Erfinder: Pfeil, Armin, Dr., 86916 Kaufering (DE); Stengel-Rutkowski, Bernhard, 65207 Wiesbaden (DE); Godau, Claus, 65399 Kiedrich (DE)

(57) **Zusammenfassung**

Wäßrige, lösemittelarme Beschichtungsmittel, enthaltend eine modifizierte Epoxidharzdispersion, bestehend aus einem Epoxidharz, hergestellt durch Kondensation aus einer oder mehreren Epoxidverbindung(en) mit mindestens zwei Epoxidgruppen pro Molekül und einem aromatischen Polyol; ein Dispergiermittel aus einem Kondensationsprodukt aus einem aliphatischen Polyol und einer Epoxidverbindung mit mindestens zwei Epoxidgruppen pro Molekül; einem Verdünnungsmittel; bestehend aus zur radikalischen Polymerisation bzw. Copolymerisation befähigten äthylenisch ungesättigten, ansonsten inerten oder gegebenenfalls funktionellen Monomeren, und Wasser, sowie ein wäßriges Härtungsmittel für das modifizierte Epoxidharz (I), welches sich für die Härtung bei Raumtemperatur oder bei erhöhten Temperaturen (forcierte Trocknung) eignet, wobei die Komponenten (I) und (II) in solchen Massenanteilen eingesetzt werden, daß das Verhältnis der Anzahl der zur Umsetzung befähigten Epoxidgruppen zur Anzahl der Aminwasserstoffatome zwischen 1: 0,75 und 1 : 2,0 liegt. Die Beschichtungsmittel können zur Herstellung von matten Beschichtungen und in Klebstoffen eingesetzt werden.

## Beschreibung

Aus der DE-A 36 43 751 sind bereits wäßrige Epoxidharzdispersionen bekannt, die in Gegenwart eines Kondensationsproduktes aus einem aliphatischen Polyol und einer Epoxidverbindung als Emulgator hergestellt werden. Diese wäßrigen Dispersionen enthalten jedoch neben Wasser immer eine gewisse Menge an organischen Lösungsmitteln. In der DE-A 41 28 487 wurde ein Weg beschrieben, wie man diese Menge an organischen Lösungsmitteln noch weiter verringern kann bei gleichzeitiger Verbesserung der Eigenschaften dieser Dispersionen. Dazu wird das Basisharz nicht mehr in Gegenwart des Emulgators kondensiert und flexibilisierend wirkende Polyepoxide als Rohstoffe für das Epoxidharz verwendet; in den Beispielen von DE-A 41 28 487 wird Polypropylenglykoldiglycidyläther eingesetzt.

Diese Dispersionen weisen einen deutlich erniedrigten Lösungsmittelgehalt auf bei verbesserten anwendungstechnischen Eigenschaften. Im Zuge der immer weiter anzustrebenden Minimierung an flüchtigen organischen Komponenten in wäßrigen Anstrichmitteln erweist sich aber selbst der verringerte Lösungsmittelgehalt als problematisch, zudem müssen zur Flexibilisierung des Basisharzes teure Rohstoffe eingesetzt werden, welche zusätzlich negative Auswirkungen auf das Eigenschaftsbild haben können.

Vor allem kalthärtende Systeme wie zum Beispiel für den Korrosions- und Bautenschutz oder solche, welche der forcierten Trocknung unterworfen werden, sind unter dem Gesichtspunkt der Lösungsmittelemission besonders kritisch zu betrachten, da hier nicht wie bei Einbrennsystemen eine Nachverbrennung des Lösungsmittels erfolgen kann.

Eine wesentliche Verbesserung der bestehenden Systeme wäre also ein Bindemittel auf der Basis einer völlig lösemittelfreien Dispersion, welches für den Bereich kalthärtender Beschichtungen eingesetzt werden kann.

Ein besonderes Problem stellt die Erzeugung matter Beschichtungen (d.h. Glanzgrad unter 10 %) dar, die vor allem für hohe Abriebbelastung (Fußböden: Befahren, Begehen) eingesetzt werden, unter welcher glänzende Beschichtungen eine unansehnliche Oberfläche erhalten. Die Mattierung wird in der Regel durch den Einsatz von Pigmenten und Füllstoffen mit hoher spezifischer Oberfläche (z.B. hochdisperse Kieselsäuren) erreicht, welche ihrerseits einen hohen Bindemittelbedarf haben. In wäßrigen Systemen wird dadurch die Rheologie deutlich verschlechtert, Eindickung tritt auf. Somit ist es nicht möglich, selbstverlaufende matte Beschichtungen auf der Basis von Epoxidsystemen lösemittelfrei herzustellen.

Als Ausweg wird so vorgegangen, daß auf eine lösemittelfreie, nicht mattierte Beschichtung eine sehr dünne, selbstverlaufende Schicht eines lösemittelhaltigen mattierten Systems aufgetragen wird. Somit erscheint die gesamte Beschichtung von Anfang an matt, bei Abnutzung wird auch die untere Schicht matt, optisch erscheint die Oberfläche durchgehend einheitlich mattiert. Nachteilig ist hier die Verwendung von lösemittelhaltigen Systemen bei einem an sich lösemittelfreien Beschichtungsverfahren. Ein typischer konventioneller Mattlack setzt sich ungefähr aus den folgenden Massenanteilen zusammen: 30 % Mattierungsmittel, 35 % Bindemittel und 45 % organische Lösungsmittel (Xylol, Petroläther, Butylacetat, Glykolacetate etc.). Bei einer Trockenschichtdicke von etwa 40 µm werden somit fast 50 g Lösungsmittel pro Quadratmeter freigesetzt.

Nachdem es bisher nicht möglich war, aus lösemittelfreien Epoxidsystemen und Mattierungsmitteln ohne Verwendung von Lösungsmitteln selbstverlaufende matte Beschichtungen herzustellen, ist die Entwicklung eines absolut lösemittelfreien Bindemittels wünschenswert, welches ohne den Einsatz externer Mattierungsmittel auskommt und damit die genannten rheologischen Probleme nicht zeigt, und womöglich über die ganze Schichtdicke einen konstanten Glanzgrad unter 10 % aufweist.

Es ist bekannt, daß Epoxid-Acryl-Systeme vorteilhafte Eigenschaften aufweisen können, die mit den Einzelkomponenten nicht erreicht werden und die durch die vorteilhaften Eigenschaften der einzelnen Komponenten bedingt sind. So bringt die Epoxidkomponente gute Haftung, Flexibilität, Chemikalienbeständigkeit und Zähigkeit mit ein, die Acrylkomponente je nach Auswahl der Monomeren gezielt einstellbare Glasübergangstemperatur und Härte sowie mechanische Beständigkeit.

Unter "Acrylkomponente" seien hier Copolymerisate verstanden, welche durch (Co)Polymerisation von α,β-ungesättigten Monomeren erhalten werden, die im folgenden als "Acryl-Monomere" bzw. "Acrylate" bezeichnet werden. Beispiele sind Ester, Amide und Nitrile der Acryl- und Methacryl-Säure, copolymerisierbare Vinylverbindungen wie Vinylacetat, Vinyläther und Vinylhalogenide, aber auch Malein-, Itacon- und Fumarsäurederivate.

In der Anmeldung DE-A 43 27 493 wird ein Verfahren beschrieben, um wäßrige, lösemittelarme oder gar absolut lösemittelfreie, nichtionisch stabilisierte Epoxidharz-Dispersionen auf der Basis der Dispersionen, wie sie in DE-A 41 28 487 beschrieben sind, nach Modifikation mit "Acrylaten" herzustellen. Dort wird ihre spezielle Verwendung in Kombination mit geeigneten Härtungsmitteln als 1K-System für die Heißhärtung, speziell für die Konservendoseninnenlackierung beschrieben, nicht aber die Verwendung der härtungsmittelfreien Dispersionen als eine Komponente für kalthärtende 2K-Beschichtungsmassen.

Überraschenderweise wurde nun gefunden, daß nach diesem Verfahren extrem lösemittelarme oder gar lösemittelfreie Epoxidharzdispersionen herstellbar sind, welche sich sehr gut zur Raumtemperaturhärtung bzw. forcierten Trocknung eignen und zudem bei geeigneter Wahl der Acryl-Monomeren besonders hervorragende Mattlacksysteme ergeben, welche ganz ohne Mattierungsmittel auskommen.

Gegenstand der Erfindung sind demgemäß wäßrige, lösemittelarme Beschichtungsmittel, die folgende Komponenten enthalten:
(I) Eine modifizierte Epoxidharzdispersion, bestehend aus
   (A) einem Epoxidharz als Kondensationsprodukt aus Massenanteilen von
      (A-1) 50 bis 95, vorzugsweise 55 bis 85 % einer oder mehrerer Epoxidverbindung(en) mit mindestens zwei Epoxidgruppen pro Molekül und bevorzugt einem Epoxidgruppengehalt von 300 bis 12 000 mmol/kg (Epoxidäquivalentgewicht = molare Masse dividiert durch die Anzahl der Epoxidgruppen pro Molekül von 90 bis 3000 g/mol)
      (A-2) 5 bis 50, vorzugsweise 15 bis 45 % eines aromatischen Polyols und gegebenenfalls
      (A-3) 0 bis 25, vorzugsweise 1 bis 10 % modifizierender Verbindungen mit mindestens zwei epoxid-reaktiven Gruppen,
   (B) einem Dispergiermittel aus
      (B-1) einem Kondensationsprodukt aus einem aliphatischen Polyol (B-11) mit einer gewichtsmittleren molaren Masse M_{w} von 200 bis 20000 g/mol und einer Epoxidverbindung (B-12) mit mindestens zwei Epoxidgruppen pro Molekül und bevorzugt einem Epoxidgruppengehalt von 300 bis 12 000 mmol/kg, besonders bevorzugt 500 bis 10 000 mmol/kg ("Epoxidäquivalentgewicht" von 90 bis 3000 bzw. 100 bis 2000 g/mol), wobei das Verhältnis der Anzahl der OH-Gruppen in (B-11) zu der der Epoxidgruppen in (B-12) 1:0,5 bis 1:3,5 beträgt und der Epoxidgruppengehalt dieses Kondensationsproduktes zwischen 2,5 und 200 mmol/kg (Epoxidäquivalentgewicht 5 000 bis 400 000 g/mol) liegt, und
      (B-2) gegebenenfalls weiteren, vorzugsweise nichtionischen Tensiden,
   (C) einem Verdünnungsmittel, bestehend aus
      (C-1) zur radikalischen Polymerisation bzw. Copolymerisation befähigten äthylenisch ungesättigten, ansonsten inerten oder gegebenenfalls funktionellen Monomeren, sowie
      (C-2) gegebenenfalls niedermolekularen, flüssigen epoxyfunktionellen Verbindungen,
   (D) und Wasser sowie gegebenenfalls organischen Lösungsmitteln,
(II) ein wäßriges Härtungsmittel für das modifizierte Epoxidharz (I), welches sich für die Härtung bei Raumtemperatur oder bei erhöhten Temperaturen (forcierte Trocknung) eignet,
und gegebenenfalls
(III) übliche Additive und Katalysatoren, wobei die Komponenten (I) und (II) in solchen Massenanteilen eingesetzt werden, daß das Verhältnis der Anzahl der zur Umsetzung befähigten Epoxidgruppen zur Anzahl der Aminwasserstoffatome zwischen 1: 0,75 und 1 : 2,0 liegt.

Die Erfindung betrifft weiterhin ein Verfahren zur Herstellung der wäßrigen modifizierten Epoxidharzdispersion (I), dadurch gekennzeichnet, daß zunächst das Epoxidharz (A) durch Kondensation der Komponenten (A-1), (A-2) und gegebenenfalls (A-3) bei erhöhten Temperaturen in Gegenwart von Kondensationskatalysatoren hergestellt wird, anschließend bei tieferer Temperatur zumindest eine Teilmenge des Verdünnungsmittels (C) zugefügt wird und gegebenenfalls eine teilweise Reaktion der Monomeren (C-1) mit dem Epoxidharz (A) vollzogen wird, darauf das Dispergiermittel (B) einhomogenisiert wird und eine wäßrige Dispersion durch portionsweises Zudosieren von Wasser (D) erhalten wird, worauf man mit Hilfe eines geeigneten Initiatorsystems und gegebenenfalls unter Zugabe des restlichen Verdünnungsmittels (C) bei geeigneten Temperaturen die Monomeren (C-1) vollständig in eine Polymerdispersion überführt. Die gegebenenfalls verwendeten Teilmengen des Verdünnungsmittels können verschiedener Zusammensetzung hinsichtlich Menge und Art der Bestandteile (C-1) und (C-2) sein.

Das erfindungsgemäße Bindemittel wird hergestellt durch Abmischen dieser Epoxid-Acrylat-Dispersion mit einem geeigneten Härtungsmittel (II), gegebenenfalls gefolgt von dem Fachmann bekannten Zuschlagstoffen gemäß (III). Bei den 1,2-Epoxidverbindungen entsprechend (A-1) und (B-12) handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen und Polyäthereinheiten aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten und Äthergruppierungen.

Vorzugsweise handelt es sich dabei um Polyglycidyläther auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidgruppengehalte dieser Epoxidverbindungen liegen vorzugsweise zwischen 300 und 12 000 mmol/kg, bevorzugt 500 und 10 000 mmol/kg, insbesondere zwischen 2800 und 10 000 mmol/kg (Epoxidäquivalentgewichte zwischen 90 und 3000, bevorzugt 100 und 2000, insbesondere zwischen 100 und 350 g/mol).

Als mehrwertige Phenole sind beispielsweise zu nennen: Resorcin, Hydrochinon, 2,2-Bis-(4-hydroxyphenyl)-propan (Bisphenol A), Dihydroxydiphenylmethan (Bisphenol F, gegebenenfalls Isomerengemische), Tetrabrom-Bisphenol A, 4,4'-Dihydroxydiphenylcyclohexan, 2,2-Bis-(4-hydroxy-3-methylphenyl)propan, 4,4'-Dihydroxydiphenyl, 4,4'-Dihydroxybenzophenon, 1,1-Bis-(4-hydroxy-phenyl)-äthan, 2,2-Bis[4-(2-hydroxypropoxy)phenyl]-propan, 1,1-Bis-(4-hydroxyphenyl)-isobutan,2,2-Bis-(4-hydroxy-3-tert.butylphenyl)-propan,Bis-(2-hydroxynaphthyl)-methan, 1,5-Dihydroxynaphthalin, Tris-(4-hydroxyphenyl)-methan, Bis-(4--hydroxyphenyl)-äther, Bis-(4-hydroxyphenyl)-sulfon sowie die Halogenierungs- und Hydrierungsprodukte der vorstehend genannten Verbindungen. Bisphenol A ist hierbei besonders bevorzugt.

Als Beispiele für mehrwertige Alkohole seien Äthylenglykol, Diäthylenglykol, Triäthylenglykol, Polyäthylenglykole (n = 4 bis 35), 1,2-Propylenglykol, Polypropylenglykole (n = 2 bis 15), 1,3-Propylenglykol, 1,4-Butandiol, 1,5-Pentandiol, 1,6-Hexandiol, 1,2,6-Hexantriol, Glycerin, Neopentylglykol, 1,4-Dimethylolcyclohexan, Trimethyloläthan, Trimethylolpropan, aber auch Blockcopolymere von Äthylenoxid, Propylenoxid usw., sowie äthoxylierte und propoxylierte Bisphenole wie z.B. propoxyliertes Bisphenol A, genannt. Polyäthylenglykole und Polypropylenglykole (n = 8 bis 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierten Fettsäuren wie Linolensäure, oder auch mit sauren Polyestern erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A.M. Paquin, Springer Verlag, Berlin 1958, Kapitel IV und in Lee, Neville, "Handbook of Epoxy Resins", McGraw-Hill Book Co., 1967, Kapitel 2. Die genannten Epoxidverbindungen können einzeln oder im Gemisch eingesetzt werden.

Als aromatische Polyole entsprechend (A-2) kommen vorzugsweise die aromatischen OH-gruppenhaltigen Verbindungen in Frage, die vorstehend bei den Komponenten (A-1) / (B-12) beschrieben wurden, also mehrwertige, vorzugsweise zweiwertige Phenole, deren Halogenierungsprodukte und/oder Novolake. Besonders bevorzugt ist auch hier Bisphenol A.

Bei den modifizierenden Verbindungen gemäß (A-3) handelt es sich um Verbindungen mit mindestens zwei funktionellen Gruppen, welche zur Reaktion mit den Epoxidgruppen der Komponente (A-1) befähigt sind, und welche sich nicht unter den aromatischen Polyolen gemäß (A-2) einordnen lassen. Ihr Einsatz kann erfolgen, um durch gezielte Modifikation wünschenswerte Eigenschaften des Basisharzes (A) einzustellen. Hierbei kann es sich um Polyamine (z.B. Äthylendiamin, Diäthylentriamin,Triäthylentetramin,Tetraäthylenpentamin), Polyoxyalkylenoxide mit endständigen Aminogruppen (z.B. Jeffamine® und Novamin®), Polycarbonsäuren (z.B. Maleinsäure, Fumarsäure, Phthalsäure, Bernsteinsäure, dimere und trimere Fettsäuren usw. und deren Anhydride, soweit verfügbar) sowie aliphatische Polyole (z.B. Äthylenglykol, Propylenglykol, Butylenglykol, Polyäthylenglykol, Polypropylenglykol, Trimethylolpropan und -äthan, Neopentylglykol, Glycerin) handeln. Besonders bevorzugt sind dimere Fettsäuren mit 20 bis 50 Kohlenstoffatomen und Jeffamine.

Bei den Polyolen (B-11) zur Herstellung der Komponente (B-1) handelt es sich vorzugsweise um Polyätherpolyole (Polyalkylenglykole) mit gewichtsmittleren molaren Massen (M_{w}; Gelpermeationschromatographie; Polystyrolstandard) von bevorzugt zwischen 600 und 12000 g/mol, insbesondere 2000 bis 8000 g/mol und OH-Zahlen zweckmäßigerweise von 10 bis 600 mg/g, bevorzugt 15 bis 120 mg/g. Diese Polyätherpolyole besitzen vorzugsweise nur endständige, primäre OH-Gruppen. Beispielsweise seien hier Blockcopolymere aus Äthylenoxid und Propylenoxid sowie Polyäthylen-, Polypropylen-, Polybutylenglykole genannt, wobei auch Gemische der jeweiligen Polyalkylenglykole eingesetzt werden können. Vorzugsweise werden Polyäthylenglykole verwendet.

Zusätzlich können zum erfindungsgemäßen Dispergiermittel (B-1) auch weitere Dispergiermittel (B-2) anionischer, kationischer und vorzugsweise nichtionischer Art verwendet werden. In Frage kommen Alkylbenzolsulfonate, primäre und sekundäre Alkansulfonate, α-Olefinsulfonate, Alkylsulfate und Alkyläthersulfate als anionische sowie quaternäre Ammoniumverbindungen als kationische Tenside in Frage, wobei die ionischen Gruppen nicht mit den Epoxidgruppen wechselwirken dürfen. Bevorzugt ist aber die Verwendung nichtionischer Tenside wie äthoxylierter oder äth/propoxylierter Alkohole, Oxoalkohole, Alkylphenole (z.B. Arcopal® der Firma Hoechst AG), Rizinusöle, Ester, Glycerinstearate, Fettsäuren, Fettamine, Fettalkohole, aber auch z.B. Äthylenoxid-Propylenoxid-Blockcopolymere (z.B. Pluronic® der Firma BASF). Auch die speziell zur Dispergierung von Epoxidharzen beschriebenen Emulgatoren können zum Einsatz kommen, wie z.B. bekannt aus US-A 4,423,201 und US-A 4,446,256 (Produkte aus Polyoxyalkylenglykolen, Diisocyanaten und Bisphenolen), EP-A 0 497 404 (Produkte aus Alkoxypolyalkylenglykolen, Anhydriden und Alkylenoxiden, Epoxyalkoholen oder Diglycidyläthern), WO 91/10695 (Produkte aus Polyglycidyläthern, bifunktionellen Verbindungen und Alkoxypolyalkylenglykolen), EP-A 0 109 173 (Produkte aus Polyoxyalkylenpolyaminen und Epoxidharzen) und DE-A 41 36 943 (Produkte aus Polyalkylenglykolen mit Diisocyanaten und Polyepoxiden).

Als Monomere gemäß (C-1) kommen sämtliche äthylenisch ungesättigten Verbindungen in Frage, welche zur radikalischen Polymerisation in wäßriger Emulsion befähigt sind und nicht unerwünscht bei Raumtemperatur mit der vorliegenden Epoxidharzdispersion wechselwirken. Dazu zählen Acryl-, Methacryl- und höhere Alkacrylsäuren, sowie deren Alkylester (C₁- bis C₁₈-Alkyl(meth)acrylate, z.B. Methylacrylat und -methacrylat, Äthylacrylat und -methacrylat, n- und iso-Propylacrylat und -methacrylat, n-, iso- und tert.-Butylacrylat, n- und tert-Butylmethacrylat, 2-Äthylhexylacrylat und -methacrylat, 4-tert.-Butylcyclohexylacrylat, Isobornylacrylat und -methacrylat) und Derivate (z.B. Acrylnitril), aber auch Vinylderivate (z.B. Styrol, α-Methylstyrol, Vinyltoluole, Vinylacetat, Vinylchlorid, Vinylidenchlorid, N-Vinylpyrrolidon) und α,β-ungesättigte Carbonsäuren wie Maleinsäure, Fumarsäure, Itaconsäure sowie deren Derivate, und Alkene wie Isopren und Butadien. Die Monomeren können auch funktionelle Gruppen enthalten, welche bei der später anzustrebenden Härtungsreaktion partizipieren, so eignen sich hier z.B. speziell glycidylfunktionelle Monomere (z.B. Glycidylmethacrylat, Glycidylacrylat). Schließlich können auch mehrfunktionelle Monomere, sei es bezüglich der Polymerisation oder der Härtung, zugegen sein, so z.B. 1,6-Hexandioldiacrylat, Divinylbenzol.

Als Komponente (C-2), niedermolekulare flüssige epoxyfunktionelle Verbindungen sind zu nennen Mono- und Diglycidyläther, welche u.a. unter dem Begriff Reaktivverdünner bekannt sind, z.B. para-tert.-Butylphenylglycidyläther, n-Butylglycidyläther, Phenylglycidyläther, ortho-Kresylglycidyläther, Butandioldiglycidyläther, Hexandioldiglycidyläther, Neopentylglykoldiglycidyläther, Dimethylolcyclohexandiglycidyläther, 2-Äthylhexylglycidyläther, höhere Alkylglycidyläther usw. (z.B. die Reaktivverdünner der Serie Grilonit® RV der Firma Ems Chemie, Epodil® der Firma Anchor oder Eurepox® RV der Firma Schering), Versaticsäureglycidylester (Cardura® E 10 der Firma Shell), flüssige Polyoxyalkylenglykol-Diglycidyläther (z.B. Beckopox® EP 075 der Firma Hoechst), aber auch flüssige Epoxidharze wie z.B. Bisphenol A- und F-diglycidyläther. Die Komponente (C-2) wird im folgenden aus Gründen der Einfachheit Reaktivverdünner genannt.

Der Dispersion aus Epoxid-Acrylharz und Dispergiermittel können gegebenenfalls auch Lösungsmittel (D) zugesetzt werden. Als organische Lösungsmittel kommen hier insbesondere in Frage Glykole, Mono- und Diäther- und -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole sowie Ester und Ketone, wobei diese Lösungsmittel einzeln oder im Gemisch eingesetzt werden können. Als Beispiele seien genannt: Äthylenglykol, Äthylenglykolmonomethyläther, Äthylenglykoldimethyläther, Butylglykol, Methoxypropanol, Äthoxypropanol, Äthanol, 1- und 2-Propanol, Butanol, Cyclohexanol, Benzylalkohol, Essigsäureäthylester, Aceton so wie Methylisobutylketon, aber auch Aromaten wie Toluol oder Xylol können verwendet werden. Bevorzugte Lösungsmittel sind Butylglykol, Methoxypropanol, Methoxybutanol, Isopropoxy-propanol, Äthoxypropanol, 2-Propanol und/oder Benzylalkohol.

Nach dem erfolgten Dispergiervorgang wird in der Epoxidharzdispersion die Emulsionspolymerisation eingeleitet, bei einer Temperatur, die eine zügige, vollständige Reaktion gewährleistet und gleichzeitig die Dispersion nicht gefährdet. Als Initiatoren kommen hierfür solche thermischer Natur oder Redoxsysteme, die sämtlich dem Fachmann gut bekannt sind, in Frage. Thermische Initiatoren sind Peroxide, Hydroperoxide, Perester, Diazoverbindungen, z.B. Dibenzoylperoxid,Acetylperoxid, Benzoylhydroperoxid,tert.-Butylhydroperoxid, Di-tert.-butylperoxid, Lauroylperoxid, Butyrylperoxid, Diisopropylbenzolhydroperoxid, Cumolhydroperoxid, Paramenthanhydroperoxid, Diacetylperoxid, Di-α-cumylperoxid, Dipropylperoxid, Diisopropylperoxid, Isopropyl-tert.-butylperoxid, Butyl-tert.-butylperoxid, Dilauroylperoxid, Difuroylperoxid, Ditriphenylmethylperoxid, Bis-(p-methoxybenzoyl)-peroxid, p-Monomethoxybenzoylperoxid, Rubrenperoxid, Ascaridolperoxid, tert.-Butylperoxybenzoat, Diäthylperoxyterephthalat, Propylhydroperoxid, Isopropylhydroperoxid, n-Butylhydroperoxid, Cyclohexylhydroperoxid, trans-Decalinhydroperoxid, α-Methylbenzylhydroperoxid, α-Methyl-α-Äthylbenzylhydroperoxid, Tetralinhydroperoxid, Triphenylmethylhydroperoxid, Diphenylmethylhydroperoxid, 2,5-Dimethyl-2,5-bis(2-Äthylhexanoylperoxy)-hexan und 1,1-Bis(tert.-butylperoxy)-cyclohexan. Redox-Systeme können gewählt werden aus Oxydantien wie z.B. Wasserstoffperoxid, tert.-Butylhydroperoxid, Persulfaten, in Kombination mit Reduktionsmitteln wie alpha-Hydroxyketonen, Ascorbinsäure, Hydrazin und Sulfiten, Bisulfiten, Metasulfiten oder Hydrogensulfiten. Bevorzugt sollten Initiatoren eingesetzt werden, welche keine oder wenig ionische Verbindungen generieren, um die Wasserempfindlichkeit der später eingebrannten Filme nicht unnötig zu erhöhen. Ein besonders bevorzugtes System ist tert.-Butylhydroperoxid/Ascorbinsäure.

Als Härter (II) für die Epoxidharze (I) der Erfindung können die hierfür bekannten Härtungsmittel bzw. härtenden Verbindungen (Epoxidhärter) eingesetzt werden, wie basische Härtungsmittel (Aminhärter), beispielsweise Polyamine, Mannich-Basen, Addukte von Aminen an Polymere wie Polyepoxide und Polyamidoamine.

Die Härtung der erfindungsgemäßen Epoxidharzdispersionen (I) ist ferner durch sogenannte latente Härtungsmittel möglich, d.h. Verbindungen, die erst bei höherer Temperatur, beispielsweise bei 60 bis 250 °C, ihre vernetzende Wirkung gegenüber Epoxidverbindungen entfalten. Beispiele für solche Härter sind Harnstoff, Dicyandiamid, Imidazol und Imidazolin sowie (z.B. mit Alkyl- oder Alkoxy-Gruppen) substituierte Imidazole und Imidazoline, Guanidin, Hydrazid und Derivate der genannten Verbindungen. Aber auch z.B. Melaminharze oder saure Härtungsmittel sind denkbar. Bevorzugt wird von diesen latenten Härtungsmitteln Dicyandiamid eingesetzt.

Beispiele für basische Härtungsmittel, vorzugsweise für die bevorzugte Härtung bei Raumtemperatur und/oder niedrigeren Temperaturen (Aminkalthärter), die allgemein im Verhältnis der Anzahl der Epoxidgruppen zur Anzahl der Aminwasserstoffatome von 1 zu (0,75 bis 2,0) eingesetzt werden, sind Polyalkylenamine, wie Diäthylentriamin, Triäthylentetramin, Tetraäthylenpentamin, Pentaäthylenhexamin, ferner 2,2,4- und/oder 2,4,4-Trimethylhexamethylendiamin, Bis-(3-aminopropyl)-amin, 1,4-Bis-(3-aminopropyl)-piperazin, N,N-Bis-(3-aminopropyl)-äthylendiamin, Neopentandiamin, 2-Methyl-1,5-pentandiamin, 1,3-Diaminopentan, Hexamethylendiamin u.a., sowie cycloaliphatische Amine wie 1,2- bzw. 1,3-Diaminocyclohexan, 1,4-Diamino-3,6-diäthylcyclohexan, 1,2-Diamino-4-äthylcyclohexan, 1-Cyclohexyl-3,4-diaminocyclohexan, Isophorondiamin und Umsetzungsprodukte davon, 4,4'-Diaminodicyclohexyl-methan und -propan, 2,2-Bis(4-aminocyclohexyl)-methan und -propan, 3,3'-Dimethyl-4,4'-diaminodicyclohexylmethan, 3-Amino-1-cyclohexyl-aminopropan, 1,3- und 1,4-Bis-(aminomethyl)-cyclohexan.

Als araliphatische Amine werden insbesondere solche eingesetzt, bei denen aliphatische Aminogruppen vorhanden sind, z.B. meta- und para-Xylylendiamin, und/oder deren Hydrierungsprodukte.

Die genannten Amine können allein oder als Gemische verwendet werden.

Geeignete Mannich-Basen werden durch Kondensation von Polyaminen, vorzugsweise Diäthylentriamin, Triäthylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und Xylenolen, para-tert.-Butylphenol, Resorcin, 4,4'-Dihydroxydiphenylmethan, 2,2-Bis-(4-hydroxy-phenyl)-propan, vorzugsweise aber Phenol hergestellt.

Als Amin-Epoxid-Addukte kommen beispielsweise Umsetzungsprodukte von Polyaminen, wie z.B. Äthylendiamin, Propylendiamin, Hexamethylendiamin, 2,2,4-, 2,4,4-Trimethylhexamethylendiamin, meta-Xylylendiamin und/oder Bis-(aminomethyl)-cyclohexan mit endständigen Mono- oder Polyepoxiden, wie z.B. Propylenoxid, Hexenoxid, Cyclohexenoxid, oder mit Glycidyläthern wie Phenylglycidyläther, tert.-Butylglycidyläther, Äthylhexylglycidyläther, Butylglycidyläther oder mit Glycidylestern, wie dem Glycidylester der Neopentan- oder der Neodecansäure (Cardura® E 10), oder den unter (A-1) genannten Polyglycidyläthern und -estern in Betracht.

Polyamidoamine, die zur Härtung der erfindungsgemäßen Epoxidharzdispersionen verwendet werden können, werden beispielsweise durch Umsetzung von Polyaminen mit Mono- oder Polycarbonsäuren, z.B. dimerisierten Fettsäuren, erhalten.

Bevorzugt werden als Aminhärter eingesetzt neben den oben genannten Polyaminen wasserlösliche Polyoxyalkylendi- und -polyamine mit molaren Massen von 100 bis 2000 g/mol, z.B. die von der Firma Texaco unter dem Warenzeichen Jeffamine® vertriebenen Produkte, sowie die leicht in Wasser dispergierbaren Härtungsmittel, wie sie in der DE-B 23 32 177 und der EP-B 0 000 605 beschrieben sind, also z.B. modifizierte Amin-Addukte.

Zur Erzielung einer schnelleren und/oder weitergehenden Durchhärtung können die aus den erfindungsgemäßen Epoxidharzdispersionen mit den genannten Aminhärtern erhältlichen Beschichtungen auch 15 bis 120 Minuten auf 50 bis 120 °C erhitzt werden (sogenannte forcierte Trocknung).

Als übliche Zusatzstoffe im Sinne von (III), die eventuell in den erfindungsgemäßen Dispersionen bzw. Bindemitteln vorhanden sein können, seien hier beispielsweise die üblichen Lackadditive wie Pigmente, Pigmentpasten, Antioxidantien, Verlaufs- bzw. Verdickungsmittel, Entschäumer/Entlüfter und/oder Netzmittel, Reaktivverdünner, Füllstoffe, Katalysatoren, Konservierungsmittel, Schutzkolloide genannt. Diese Additive, wie auch die Härter, können der Dispersion gegebenenfalls erst unmittelbar vor der Verarbeitung zugegeben werden.

Zur Herstellung der erfindungsgemäßen Epoxidharzdispersionen wird zunächst das Epoxidharz (A) durch Kondensation der Komponenten (A-1) und (A-2), gegebenenfalls mit (A-3), bei erhöhten Temperaturen, im allgemeinen bei 100 bis 220 °C, vorzugsweise bei 150 bis 180 °C, in Gegenwart eines die Kondensation beschleunigenden Katalysators hergestellt.

Geeignete Kondensationskatalysatoren sind beispielsweise Phosphine, wie Triphenylphosphin, Phosphoniumsalze, wie z.B. Benzyltrimethylphosphoniumchlorid, tertiäre Amine, wie N,N-Dimethylbenzylamin, quartäre Ammoniumsalze, wie z.B. Tetramethylammoniumchlorid, Alkalihydroxide, wie Natriumhydroxid und Lithiumhydroxid, Alkalicarbonate, wie Natriumcarbonat und Lithiumcarbonat, Alkalisalze organischer Säuren, wie z.B. Natriumformiat, Lithiumbenzoat und Lithiumstearat und Lewis-Säuren, wie z.B. Bortrifluorid und seine Komplexe, Titantetrachlorid, Zinnchlorid und Triäthyloxoniumtetrafluoroborat.

Werden zwei oder mehrere Epoxidverbindungen (A-1) eingesetzt, so wird die Kondensationsreaktion vorzugsweise in zwei Stufen durchgeführt, wobei in einer ersten Reaktion eine oder mehrere Komponenten (A-1) mit den Komponenten gemäß (A-2) und gegebenenfalls (A-3) in einem solchen Mengenverhältnis umgesetzt werden, daß dieses erste Kondensationsprodukt einen Epoxidgruppengehalt unter 200 mmol/kg, vorzugsweise unter 50 mmol/kg besitzt (Epoxid-Äquivalentgewicht größer als 5000 g/mol, vorzugsweise größer als 20000 g/mol) und noch freie phenolische Gruppen aufweist, und in einer weiteren Kondensationsreaktion dieses erste Kondensationsprodukt mit weiteren Epoxidverbindungen gemäß (A-1) umgesetzt wird, so daß schließlich das gewünschte Epoxidharz (A) erhalten wird.

Das Dispergiermittel (B-1) wird durch Kondensation der genannten Polyätherpolyole (B-11) mit den Polyglycidyläthern (B-12) in Gegenwart geeigneter Katalysatoren bei 50 bis 200 °C, vorzugsweise bei 90 bis 170 °C, hergestellt, wobei das Verhältnis der Anzahl der OH-Gruppen zu der der Epoxidgruppen 1:0,5 bis 1:8, vorzugsweise 1:0,85 bis 1:4 und der Epoxidgruppengehalt des Kondensationsproduktes zwischen 2,5 und 8500 mmol/kg (Epoxidäquivalentgewicht 120 g/mol bis 400 000 g/mol) beträgt.

Als Katalysatoren für die Darstellung des Dispergiermittels (B-1) eignen sich starke anorganische und organische Basen, wie zum Beispiel Alkali- und Erdalkalihydroxide und -oxide (z.B. Lithiumhydroxid, Natriumhydroxid, Kaliumhydroxid, Calciumhydroxid, Bariumhydroxid, Magnesiumoxid, Calciumoxid) Alkalialkoholate (z.B. Natriummethylat, Lithiummethylat, Natriumäthylat, Kaliumdodecylat usw.) sowie die Alkalisalze von Carbonsäuren (z.B. Natrium- und Lithiumstearat bzw.-lactat) und Hydride (z.B. Alkali- und Erdalkalihydride und -borhydride wie Natriumhydrid, Calciumhydrid und Natriumborhydrid). Ebenfalls geeignet sind starke anorganische und organische Protonsäuren (z.B. Phosphorsäure, Schwefelsäure, Tetrafluorborsäure und Benzolsulfonsäure) als auch Lewis-Säuren (z.B. Zinn(IV)chlorid, Titan(IV)chlorid, Titan(IV)isopropylat, Triäthyloxoniumtetrafluoroborat sowie Bortrifluorid und seine Komplexe, zum Beispiel mit Phosphorsäure, Essigsäure (1:1 und 1:2), Methanol, Diäthyläther, Tetrahydrofuran, Phenol, Äthylenglykolmonoäthyläther, Polyäthylenglykol (molare Masse 200 g/mol), Dimethylsulfoxid, Di-n-butyläther, Di-n-hexyläther, Bernsteinsäure und aliphatische, cycloaliphatische, araliphatische Amine sowie Stickstoff-Heterocyclen usw.). Aber auch gewisse anorganische Salze eignen sich gut als Katalysatoren, wie z.B. Alkali- und Erdalkalifluoride, -phosphate und -stannate.

Bevorzugt werden als Katalysatoren die Komplexe von BF₃ mit Diäthyläther oder Essigsäure und wäßrige Tetrafluorborsäure eingesetzt. Der Massenanteil an Katalysator im Reaktionsgemisch beträgt im allgemeinen 0,1 bis 5, vorzugsweise 0,1 bis 1 %. Zur besseren Dosierung kann der Katalysator in einem Lösungsmittel wie Diäthyläther, einem Glykol- oder cyclischen Äther, Ketonen und dergleichen verdünnt werden.

Zur Herstellung des Dispergiermittels erwärmt man die umzusetzenden Gemische aus Hydroxylgruppen und Epoxidgruppen enthaltenden Verbindungen bis zu der Temperatur, bei der die Kondensation mit ausreichender Geschwindigkeit, d.h. in 30 min bis 5 Stunden, abläuft. Die Umsetzung verfolgt man zweckmäßig über die Abnahme des Epoxidgruppengehalts. Die Reaktion kann durch Abkühlen unter die Reaktionstemperatur abgebrochen werden.

Das so gewonnene Kondensationsprodukt kann unverdünnt als Dispergiermittel (B-1) zur Herstellung der erfindungsgemäßen Dispersionen verwendet werden. Vorzugsweise wird jedoch aus Gründen der besseren Handhabbarkeit eine Mischung als Dispergiermittel (B-1) verwendet, die Massenanteile von 20 bis 99, vorzugsweise 40 bis 60 % des Kondensationsproduktes enthält, bevorzugt in Wasser oder einem wäßrigen Medium, das seinerseits aus Massenanteilen von bis zu 100, vorzugsweise bis zu 75 %, eines organischen Lösungsmittels besteht. Als organische Lösungsmittel kommen insbesondere Glykole, Mono- und Diäther- und -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole sowie Ester und Ketone in Betracht, wobei diese Lösungsmittel einzeln oder im Gemisch eingesetzt werden können. Als Beispiele seien genannt: Äthylenglykol, Äthylenglykolmonomethyläther, Äthylenglykoldimethyläther, Butylglykol, Methoxypropanol, Äthoxypropanol, Äthanol, 1- und 2-Propanol, Butanol, Cyclohexanol, Benzylalkohol, Essigsäureäthylester, Aceton so wie Methylisobutylketon. Bevorzugt werden Butylglykol, Methoxypropanol, Äthoxypropanol, 2-Propanol, Hydroxyäthyl- oder -propylmethacrylat und/oder Benzylalkohol eingesetzt, oder die unter (C-1) aufgeführten Monomere.

Das Verdünnungsmittel (C) wird als gesamte Menge auf einmal vor dem Dispergieren zugesetzt, es dient so als Viskositätssenker und erleichtert die Dispergierung, oder es kann bei einem größeren Menge zum Teil während des Dispergiervorgangs zugegen sein, und der Rest wird nach erfolgter Dispergierung, z.B. kontinuierlich während der Emulsionspolymerisation zugegeben. Dabei müssen die beiden Teilmengen bezüglich Art und Zusammensetzung der Komponenten (C-1) und (C-2) nicht identisch sein. Auf diese Weise lassen sich gezielt sogenannte "core-shell-Partikel" erzeugen, deren chemische Zusammensetzung sich längs des Partikelradius ändert. Die Anwesenheit des Verdünnungsmittels während der Dispergierung hat den Sinn, daß das Viskositätsmaximum bei der Phaseninversion Wasser-in-Öl (W/O) nach Öl-in-Wasser (O/W) nicht durch inerte, in der fertigen Dispersion verbleibende Lösungsmittel abgesenkt werden muß, wie es in DE-A 41 28 487 beschrieben wurde. Somit gelingt die Formulierung völlig lösemittelfreier Dispersionen - eine weitere erhebliche Verbesserung gegenüber dem Stand der Technik. Ein zu hoher Gehalt an Verdünnungsmittel während des Dispergiervorganges würde aber die Viskosität zu weit senken, die einzutragende Scherkraft für die Zerteilungsvorgänge könnte nicht mehr aufgebaut werden. Darum ist gegebenenfalls die Aufteilung der Gesamtmenge in zwei zweckmäßige Teilmengen nötig.

Der Einsatz von Reaktivverdünner (C-2) kann gegebenenfalls erfolgen, wenn kein zu hoher Acrylierungsgrad angestrebt wird, weil dann die Menge der Monomeren (C-1) zu niedrig sein kann, um die geforderte Funktion zu erfüllen. Zudem lassen sich durch die verwendeten Reaktivverdünner die anwendungstechnischen Eigenschaften der Dispersion steuern, z.B. Senkung der Mindest-Filmbilde-Temperatur (MFT), Verlängerung der Verarbeitungszeit, Verbesserung von Glanz, Scherstabilität und Stabilität gegenüber Gefrier-Tau-Zyklen usw. Der Vorteil gegenüber der Verwendung organischer Lösungsmittel liegt darin, daß diese Reaktivverdünner bei der Härtungsreaktion in den Film eingebaut werden und somit nicht zur unerwünschten Emission organischer Komponenten führen. Die Zugabe des Reaktivverdünners vor dem Dispergierprozeß hat den Vorteil, daß dieser mit weniger Aufwand deutlich besser emulgiert wird als im Falle einer nachträglichen Zugabe zur fertigen Dispersion, was zu einer verbesserten Qualität der Beschichtung führt.

Dem Epoxidharz (A) werden zur Herstellung der modifizierten Dispersion bei Temperaturen von 60 bis 200 °C, vorzugsweise von 70 bis 120 °C, die Monomeren (C-1) - evtl. stabilisiert mit geeigneten, dem Fachmann bekannten Inhibitoren - und gegebenenfalls Reaktivverdünner (C-2) bzw. eine zweckmäßige Teilmenge, dann die Dispergiermittel (B-1) und gegebenenfalls (B-2), gegebenenfalls gefolgt von organischen Lösungsmittel (D) zugegeben und 15 bis 180, vorzugsweise 30 bis 90 Minuten, verrührt. Wahlweise läßt sich nach der Zugabe der Monomeren eine Reaktion zwischen Epoxidharz und den Monomeren durchführen, wie z.B. Addition von Carboxyl- oder Amin-Monomeren an die Epoxidgruppen oder Pfropfung an aliphatische Kohlenstoffatome der Epoxidkomponenten (A) und (C-1), bevor das Dispergiermittel zugegeben wird.

Danach wird bei Temperaturen von 30 bis 100 °C, bevorzugt 50 bis 90 °C, die entsprechende Menge an Wasser (D), vorzugsweise in mehreren Teilmengen, unter kräftigem Rühren zudosiert, wodurch die wäßrige Dispersion entsteht. Hierbei können gegebenenfalls geeignete Entschäumer-/Entlüfter-Additive zugesetzt werden. Die Dispergierung erfolgt zweckmäßigerweise unter Zuhilfenahme geeigneter Dispergierapparate, beispielsweise eines schnellaufenden Flügelrührers, eines Mehrimpulswendelrührers, einer Kolloidmühle, eines Homogenisators, eines Dissolvers oder eines sonstigen Schnellmischers mit einer hohen Scherkraft. Dieser Vorgang wird sehr detailliert in DE-A 41 28 487 beschrieben.

In der so erhaltenen, monomerenhaltigen und gegebenenfalls reaktivverdünnerhaltigen Epoxidharz-Dispersion wird nun bei geeigneter Temperatur die Emulsionspolymerisation eingeleitet. Die Temperatur muß ausreichend hoch sein, damit eine zügige Polymerisationsgeschwindigkeit erreicht wird, andererseits darf durch eine zu hohe Temperatur die Stabilität der Dispersion nicht gefährdet werden. Bei Redox-Initiatoren wird bevorzugt das Oxidationsmittel zusammen mit dem Verdünnungswasser einhomogenisiert, und das Reduktionsmittel kontinuierlich zudosiert - aber alle denkbaren Varianten sind ebenfalls erfindungsgemäß. Bei höherer Monomerenmenge als für die Dispergierung benötigt wird dabei auch die Restmenge der Monomeren (C-1) zudosiert, wobei hier gezielt die Darstellung von "core-shell"-Acrylatpartikeln möglich ist, um die Eigenschaften der Dispersion in gewünschter Weise zu steuern. Der bevorzugte Temperaturbereich für die Emulsionspolymerisation beträgt 60 bis 90 °C, die Reaktionskontrolle erfolgt über Festkörperbestimmung oder Gaschromatographie. Eine unerwünschte Viskositätszunahme kann durch Nachdosieren von Wasser ausgeglichen werden.

Das Massenverhältnis von Epoxidharz (A) zu Additionspolymeren (C-1) liegt von 99,5 : 0,5 bis 20 : 80, bevorzugterweise zwischen 5 : 95 und 50 : 50. Dabei enthält das Polymere (C-1) gegebenenfalls glycidylgruppenhaltige Monomere in einem Massenanteil von bevorzugt 2,5 bis 25 %. Der Anteil an Reaktivverdünner (C-2) kann bis zu 25 % bezogen auf Polymere (A) und (C-1) betragen. Der Massenanteil an Dispergiermittel (B) bezieht sich auf sämtliche nicht wasserlöslichen Bestandteile der Dispersion, d.h. auf das Epoxidharz (A), das Polymer (C-1) und gegebenenfalls Reaktivverdünner (C-2) und liegt zwischen 1 und 25 %, bevorzugt zwischen 2 und 15 %. Die Zusammensetzung des Dispergiermittels liegt für (B-1) : (B-2) zwischen 0 : 100 und 100 : 0, bevorzugt über 75 : 25. Der Festkörper-Massenanteil der erfindungsgemäßen Dispersion liegt zwischen 30 und 90 %, bevorzugt aber von 55 bis 75 %, wobei die Dispersion einen Massenanteil bis zu 10 % an Lösungsmittel enthalten kann, bevorzugt aber lösemittelfrei ist.

Das Epoxidharz entsprechend (A) der erfindungsgemäßen Dispersionen besitzt vorzugsweise einen Epoxidgruppengehalt von 250 bis 2900 mmol/kg, insbesondere 300 bis 2500 g/mol (Epoxidäquivalentgewicht von 350 bis 4000, insbesondere von 400 bis 3000 g/mol). Die mittlere Teilchengröße des dispergierten Harzes ist in der Regel nicht höher als 1,0 µm und beträgt vorzugsweise 0,2 bis 0,8 µm. Die Teilchengröße des Polyacrylats (C-1) liegt unter 0,5 µm, bevorzugt unter 0,25 µm. Auch im Falle einer Pfropfung liegen die Teilchengrößen der erfindungsgemäßen Dispersionen unter 1µm.

Die Viskosität dieser Dispersionen beträgt im allgemeinen zwischen 200 und 30000 mPa·s, vorzugsweise zwischen 750 und 7000 mPa·s.

Die erfindungsgemäßen modifizierten Epoxidharzdispersionen zeichnen sich zum einen durch ihre gute Lagerstabilität aus, die auf die für Sekundärdispersionen geringe mittlere Teilchengröße zurückzuführen ist, ferner insbesondere durch ihren sehr geringen oder fehlenden Gehalt an organischen Lösungsmitteln und vor allem durch den wesentlich höheren Festkörpergehalt. Verglichen mit bereits bekannten Epoxidharzdispersionen bzw. Epoxid-Acrylat-Dispersionen besitzen die mit den erfindungsgemäßen Dispersionen erhältlichen Beschichtungen außerdem eine Reihe technischer Vorteile, z.B. geringe Wasserempfindlichkeit, gute Elastizität bei gleichzeitig sehr hoher Härte, gute bis sehr gute Haftung auf den unterschiedlichsten Substraten, hervorragende Korrosionsschutzwirkung bei Beschichtung metallischer Materialien.

Überraschenderweise wurde zusätzlich gefunden, daß mit diesen Dispersionen bei geeigneter Monomerenwahl durchgehend matte Filme erhalten werden. Es werden Glanzgrade unter 10 % gemessen. Somit ergeben sich für Mattlacke auf der Basis der erfindungsgemäßen Dispersionen folgende Vorteile, welche bisher mit noch keinem anderen wäßrigen System erreicht werden konnten: Die Mattlacke können ohne Mattierungsmittel formuliert werden, damit gibt es keinerlei Rheologieprobleme, der Einsatz von Lösungsmitteln ist nicht erforderlich. Dadurch ist es erstmals möglich, völlig lösemittelfreie, matte, selbstverlaufende wäßrige Beschichtungen herzustellen. Bei Abrieb der Beschichtungsmasse bleibt die Mattierung unverändert erhalten, da der Effekt innerhalb der Schicht konstant ist. Geringe Zusätze von Koaleszenzmitteln verbessern bei diesen Systemen die Verfilmung, ohne die Mattierung zu unterdrücken.

Die Härter und weiteren härtbaren Harze gemäß (II) werden vorzugsweise erst unmittelbar vor der Anwendung der Dispersion zugegeben.

Aufgrund ihrer bereits angesprochenen hervorragenden technischen Eigenschaften, beispielsweise hinsichtlich Haftung, sehr hohe Härte, Korrosionsschutzwirkung, Wasser- und Chemikalienbeständigkeit, eignen sich die erfindungsgemäßen Dispersionen in Kombination mit geeigneten Härtungsmitteln und Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyäthylen, Polypropylen usw.), Kompositwerkstoffen, Keramik und vorbehandelten oder nicht vorbehandelten Metallen verwendet werden.

Die erfindungsgemäßen Dispersionen sind auch hervorragend für die Einschichtlackierung geeignet. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können.

Bei geeigneter Wahl der Monomeren (C-1) können matte Klarlacke hergestellt werden, deren sonstiges Eigenschaftsbild unverändert gut ist (gute Haftung auf den verschiedensten Untergründen, sehr hohe Härte, gute Beständigkeiten usw.).

Wegen ihrer guten Verdünnbarkeit und ihrer günstigen Eigenschaften eignen sich die erfindungsgemäßen Dispersionen auch zur zusätzlichen Verwendung in der Elektrotauchlackierung.

Eine weitere Möglichkeit ist die Verwendung der erfindungsgemäßen Dispersionen zur Herstellung wasserverdünnbarer Klebstoffe. Auch als Bindemittel für textile, organische und/oder anorganische Materialien sind sie einsetzbar. Ferner können sie auch als Zusatz zu Kunststoffzementen dienen.

Im Falle des Einsatzes als Beschichtungsmittel bzw. als überwiegend wäßriger Lack erfolgt die Applikation auf das Substrat nach herkömmlichen Methoden, wie beispielsweise Streichen, Spritzen, Tauchen oder Aufwalzen. Die Beschichtungen werden, sofern keine Härtungsmittel für die Kalthärtung mitverwendet werden, durch Erhitzen auf 80 bis 250 °C für eine zum Aushärten ausreichende Zeit, im allgemeinen 5 bis 60 Minuten, gehärtet.

Gegebenenfalls benötigte Additive gemäß (III) sowie - falls für den beabsichtigten Einsatz gewünscht - weitere Härtungsmittel werden in solchen Mengen zugesetzt, wie sie für den entsprechenden Zweck benötigt und dem Fachmann bekannt sind. In diesem Fall bleibt dem Anwender überlassen, welchen Festkörper- und Lösungsmittelgehalt er wählt.

Die folgenden Beispiele beschreiben die Herstellung des Epoxidharzes (A), des Dispergiermittels (B-1), der Dispersion (A) + (B) + (C) bzw. des Bindemittels (A) + (B) + (C) + (II) sowie dessen Anwendung, wobei sie sich auf die besonders bevorzugten, absolut lösemittelfreien Systeme beschränken.

### BEISPIELE

### I. Epoxidharz (A)

Ein handelsübliches Epoxidharz auf der Basis von Bisphenol A und Epichlorhydrin mit einem Epoxidgruppengehalt von 2120 bis 2250 mmol/kg (mittleres Epoxidäquivalentgewicht von 450 bis 470 g/mol), z.B. Beckopox® EP 301 oder Epikote® 1001

### II. Dispergiermittel (B-1)

309 g technisches Polyäthylenglykol mit einer gewichtsmittleren molaren Masse (M_{w}) von 4000 g/mol und 34,1 g eines Polyglycidyläthers auf Basis von Bisphenol A mit einem Epoxidgruppengehalt von ca. 5640 mmol/kg (Epoxidäquivalentgewicht von 183 g/mol) wurden zusammen auf 100 °C erhitzt und unter Rühren mit 0,35 ml 50 %iger wäßriger Tetrafluorborsäure versetzt. Das Verhältnis der Anzahl von OH-Gruppen zur Anzahl von Epoxidgruppen betrug 1 : 1,20. Die Mischung wurde weiter auf 130 °C erwärmt und bei dieser Temperatur gehalten, bis der Epoxidgruppengehalt des Kondensationsproduktes ca. 2,9 mmol/kg (Epoxidäquivalentgewicht ca. 350000 g/mol) betrug. Nach Erkalten wies der Emulgator eine spröde, wachsartige feste Konsistenz auf.

250 g dieses Kondensationsproduktes wurden unter Rühren und leichtem Erwärmen auf ca. 80 °C in 250 g Wasser gelöst. Die erhaltene hellgelbe, klare Emulgatorlösung wies eine Viskosität (gemessen nach Brookfield, 25 °C) von 3500 mPa·s und einen Festkörper-Massenanteil von 50 % auf.

### III. Epoxid-Acrylat-Dispersionen (A) + (B) + (C)

### Abkürzungen

| | | |
|---|---|---|
| MMA Methylmethacrylat | GlyMA | Glycidylmethacrylat |
| BuGl Butylglykol | BzOH | Benzylalkohol |
| MOP Methoxypropanol | | |

### Allgemeine Arbeitsvorschrift:

423 g Epoxidharz (A) werden geschmolzen und bei 100 °C mit den Monomeren (C) gemäß der folgenden Tabelle homogenisiert und bei 90 °C mit der unten angegebenen Menge Dispergiermittel (B) versetzt. Man rührt bei 80 °C zügig 50 bis 90 g Wasser ein, rührt bis zur Phaseninversion und gibt schrittweise ca. 170 g Wasser zu, wobei die Temperatur zum Schluß bei 60 °C liegt. Man gibt tert-Butylhydroperoxid (1 % der Masse der Monomeren) zu und homogenisiert 30 Minuten lang bei dieser Temperatur. Man hält die Temperatur weiterhin bei 60 °C, gibt 0,05 ml FeSO₄-7-Hydrat-Lösung (2 % in Wasser) zu und dosiert während 1,5 Stunden eine Lösung von Ascorbinsäure (1,5 % der Masse der Monomere) in etwa 45 g Wasser zu, wobei eine leichte Exothermie zu beobachten ist. Nachdem der Ansatz noch 1,5 h bei 60 °C nachreagieren konnte, wird mit etwas Wasser verdünnt auf eine Viskosität von ca. 2500 mPa·s.

**Tabelle**

| Beispiel | Dispergiermittel (%) | Monomere (%) | nfA (%) | EGG (mmol/kg) | EV fest (g/mol) | TG (nm) | Viskosität (mPa·s) |
|---|---|---|---|---|---|---|---|
| III.1 | 6,5 | 10 MMA | 67,6 | 1767 | 566 | 491 | 1100 |
| III.2 | 6,5 | 10 (9 MMA + 1 GlyMA | 65,1 | 1859 | 538 | 783 | 2200 |
| III.3 | 7,0 | 10 MMA | 66,9 | 1789 | 559 | 448 | 1000 |
| III.4 | 7,0 | 10 (9 MMA + 1 GlyMA | 65,8 | 1821 | 549 | 409 | 1100 |
| III.5 | 7,5 | 10 MMA | 65,9 | 1773 | 564 | 409 | 1800 |
| III.6 | 7,5 | 10 (9 MMA + 1 GlyMA | 65,7 | 1828 | 547 | 398 | 1050 |
| III.7 | 6, +5 BuGl | 10 MMA | 61,3 | 1799 | 556 | 425 | 1300 |
| V | 6, +3 BzOH, + 7 MOP | ohne | 53,0 | 1905 | 525 | 500 | 1000 |
| Abkürzungen: nfA nichtflüchtiger Anteil; Festkörper (1 g, 1 h, 125 °C) EGG Epoxidgruppen-Gehalt EV Epoxidäquivalentgewicht TG Teilchengröße, Photonenkorrelationsspektroskopie, monomodal V Vergleich | | | | | | | |

### IV. Herstellung der erfindungsgemäßen Beschichtungsmittel

Allgemeine Arbeitsvorschrift für die Formulierung der erfindungsgemäßen Bindemittel:

50 g Dispersion werden mit einem Härtungsmittel gemäß EP-A 0 000 605 (Beispiel 5c), welches mit Wasser auf 40 % verdünnt wurde (Gehalt an aktiven Wasserstoff-Atomen: 3125 mmol/kg, d.i. "H-Aktiv-Äquivalentgewicht" 320 g/mol), im stöchiometrischen Verhältnis 1:1 gemischt und als Klarlack auf entfettete Glasplatten aufgezogen (Naßfilm-Schichtdicke ca. 200 µm). Trocknung erfolgt bei Raumtemperatur.

### V. Anwendungstechnische Eigenschaften

Erläuterung der Prüfungsbedingungen:
1. Staubtrocken: Auf den Film gestreute Glasperlen lassen sich nach der Aushärtung nicht mehr mit einem Pinsel entfernen.
2. Klebfrei: Die Glasperlen lassen sich nach der Aushärtung mit einem Pinsel entfernen.
3. Topfzeit ("Pot-life"): Nach dem Mischen von Härter und Dispersion werden halbstündlich Filme mit einer Naßfilmdicke von 200 µm aufgezogen. Das Auftreten einer Trübung im Film nach Aushärtung zeigt das Ende der Verarbeitungszeit an und wird als Prüfergebnis eingetragen.
4. Härte: Pendelhärte nach König, DIN 53 157.
5. Wasserfestigkeit nach 24 h, Lagerung bei Raumtemperatur: Auf Glasplatten mit 200 µm Naßfilmdicke aufgezogene Filme werden nach 24 h Lagerung in Wasser bei Raumtemperatur geprüft. Die Bewertungsskala reicht von 0 = sehr gut bis 5 = schlecht.

Die Prüfergebnisse sind in der folgenden Tabelle wiedergegeben:

| | | **Erfindungsgemäße Dispersionen** | | | | | | | **Vergleich** |
|---|---|---|---|---|---|---|---|---|---|
| Dispersion | | III.1 | III.2 | III.3 | III.4 | III.5 | III.6 | III.7 | *V* |
| Menge Dispersion | g | 50 | 50 | 50 | 50 | 50 | 50 | 50 | 50 |
| Menge Härter 40%ig | g | 23,9 | 24,2 | 23,9 | 24,0 | 23,4 | 24,0 | 22 | 20,0 |
| Verarbeitungszeit | h:min | 0:30 | 0:30 | 0:45 | 0:45 | 0:35 | 0:30 | 0:30 | 3:00 |
| Trocknung staubtr. | h:min | 0:15 | 0:25 | 0:20 | 0:35 | 0:25 | 0:20 | 0:25 | 0:20 |
| Trocknung klebfrei | h:min | 1:10 | 1:40 | 1:45 | 1:45 | 2:00 | 2:15 | 2:30 | 4:15 |
| Verlauf | * | 0 | 0 | 0 | 0-1 | 0-1 | 0 | 1-2 | 0 |
| Filmtransparenz | * | matt | matt | matt | matt | matt | matt | matt | klar |
| Oberflächenkleber | * | 0 | 0 | 0 | 0 | 0 | 0 | 0 | 0 |
| Pendelhärte n. 1 d | s | 151 | 156 | 147 | 154 | 131 | 146 | 115 | 54 |
| Pendelhärte n. 2 d | s | 175 | 179 | 179 | 184 | 170 | 171 | 145 | 75 |
| Pendelhärte n. 7 d | s | 190 | 191 | 192 | 187 | 180 | 177 | 167 | 118 |
| Wasserf. nach 24 h | * | 1 | 0-1 | 1 | 1-2 | 1 | 2 | 2 | 2 |
| Pendelhärte n. Wasserf. | s | 86 | 97 | 86 | 104 | 148 | 93 | 91 | 46 |
| Pendelhärte im Dampfraum | s | 128 | 170 | 138 | 155 | 163 | 135 | 126 | 53 |
| Glanz nach 1 h | % | 2,7 | 6,6 | 2,7 | 2,7 | 3,3 | 2,7 | 20 | 100 |

| | | | | | | | | | |
|---|---|---|---|---|---|---|---|---|---|
| * Skala: 0 = exzellent bis 5 = schlecht | | | | | | | | | |

Während die Verarbeitungszeit deutlich verkürzt ist, erhält man sehr harte, matte Filme mit Glanzgraden < 10%, sofern kein Koaleszenzmittel zugesetzt wurd e (siehe III.7). Die wasserfestigkeit ist tendenziell besser als beim Vergleich, und zwar bei den niedrigeren Emulgatorgehalten.

Da die Mattierung durchgehend ist und die Filme sehr hart sind, bleibt der Mattierungseffekt auch nach Kratzen und Polieren des Films erhalten - im Gegensatz zu herkömmlich mit Mattierungsagenzien formulierten Mattlacken. Somit eignen sich die erfindungsgemäßen Beschichtungsmittel hervorragend für die Herstellung hochabriebfester und wasserbeständiger Beschichtungen, welche auf nur einer Schicht beruhen.

## Patentansprüche

1. Wäßrige, lösemittelarme Beschichtungsmittel, die folgende Komponenten enthalten:
(I) eine modifizierte Epoxidharzdispersion, bestehend aus
(A) einem Epoxidharz, das ein Kondensationsprodukt ist aus Massenanteilen von
(A-1) 50 bis 95 % einer oder mehrerer Epoxidverbindung(en) mit mindestens zwei Epoxidgruppen pro Molekül
(A-2) 5 bis 50 % eines aromatischen Polyols;
(B) einem Dispergiermittel aus
(B-1) einem Kondensationsprodukt aus
(B-11) einem aliphatischen Polyol mit einer gewichtsmittleren molaren Masse M_{w} von 200 bis 20000 g/mol und
(B-12) einer Epoxidverbindung mit mindestens zwei Epoxidgruppen pro Molekül;
(C) einem Verdünnungsmittel, bestehend aus
(C-1) zur radikalischen Polymerisation bzw. Copolymerisation befähigten äthylenisch ungesättigten, ansonsten inerten oder gegebenenfalls funktionellen Monomeren,
(D) und Wasser,
(II) ein wäßriges Härtungsmittel für das modifizierte Epoxidharz (I), welches sich für die Härtung bei Raumtemperatur oder bei erhöhten Temperaturen (forcierte Trocknung) eignet,
wobei die Komponenten (I) und (II) in solchen Massenanteilen eingesetzt werden, daß das Verhältnis der Anzahl der zur Umsetzung befähigten Epoxidgruppen zur Anzahl der Aminwasserstoffatome zwischen 1: 0,75 und 1 : 2,0 liegt.

2. Wäßrige, lösemittelarme Beschichtungsmittel nach Anspruch 1, dadurch gekennzeichnet, daß das Epoxidharz (A) ein Kondensationsprodukt ist aus Massenanteilen von
(A-1) 55 bis 85 % einer oder mehrerer Epoxidverbindung(en) mit mindestens zwei Epoxidgruppen pro Molekül und
(A-2) 15 bis 45 % eines aromatischen Polyols.

3. Wäßrige, lösemittelarme Beschichtungsmittel nach Anspruch 1, dadurch gekennzeichnet, daß zur Herstellung des Epoxidharzes (A) als zusätzliches Edukt Massenanteile von
(A-3) 1 bis 25 % modifizierender Verbindungen mit mindestens zwei epoxid-reaktiven Gruppen verwendet werden.

4. Wäßrige, lösemittelarme Beschichtungsmittel nach Anspruch 1, dadurch gekennzeichnet, daß in den Edukten zur Herstellung des Dispergiermittels (B1) das Verhältnis der Anzahl der OH-Gruppen zu der der Epoxidgruppen 1:0,5 bis 1:3,5 beträgt und der Epoxidgruppengehalt dieses Kondensationsproduktes (B1) zwischen 2,5 und 200 mmol/kg liegt.

5. Wäßrige, lösemittelarme Beschichtungsmittel nach Anspruch 1, dadurch gekennzeichnet, daß das Dispergiermittel (B) zusätzlich nichtionische Tenside (B2) enthält.

6. Wäßrige, lösemittelarme Beschichtungsmittel nach Anspruch 1, dadurch gekennzeichnet, daß das Verdünnungsmittel (C) zusätzlich niedermolekulare flüssige Epoxid-Verbindungen (C-2) enthält.

7. Wäßrige, lösemittelarme Beschichtungsmittel nach Anspruch 1, dadurch gekennzeichnet, daß in der Dispersion ein Massenanteil von bis zu 10 % Lösungsmittel enthalten ist.

8. Wäßrige, lösemittelarme Beschichtungsmittel nach Anspruch 1, dadurch gekennzeichnet, daß die Epoxidverbindungen gemäß (A-1) und (B-12) unabhängig voneinander ausgewählt sind aus Polyglycidyläthern von mehrwertigen Alkoholen, Phenolen, hydrierten Phenolen und Novolaken sowie Polyglycidylestern von aliphatischen, cycloaliphatischen und aromatischen Polycarbonsäuren mit 2 bis 40 Kohlenstoffatomen mit einem Epoxidgruppengehalt zwischen 300 und 12 000 mmol/kg.

9. Wäßrige, lösemittelarme Beschichtungsmittel nach Anspruch 8, dadurch gekennzeichnet, daß der Epoxidgruppengehalt von (A-1) und (B-12) jeweils unabhängig voneinander zwischen 500 und 11 000 mmol/kg beträgt.

10. Wäßrige, lösemittelarme Beschichtungsmittel nach Anspruch 8, dadurch gekennzeichnet, daß der Epoxidgruppengehalt von (A-1) und (B-12) jeweils unabhängig voneinander zwischen 2 800 und 10 000 mmol/kg beträgt.

11. Wäßrige, lösemittelarme Beschichtungsmittel nach Anspruch 1, dadurch gekennzeichnet, daß die aromatischen Polyole (A-2) ausgewählt sind aus zwei- und mehrwertigen ein- und mehrkernigen Phenolen, deren Halogenierungsprodukten, sowie den Novolaken.

12. Wäßrige, lösemittelarme Beschichtungsmittel nach Anspruch 3, dadurch gekennzeichnet, daß als modifizierende Verbindungen (A-3) von aromatischen Polyolen verschiedene Körper mit mindestens zwei gegenüber Epoxidgruppen reaktiven funktionellen Gruppen eingesetzt werden.

13. Wäßrige, lösemittelarme Beschichtungsmittel nach Anspruch 3, dadurch gekennzeichnet, daß die modifizierenden Verbindungen (A-3) ausgewählt werden aus aliphatischen Polyaminen, Polyoxyalkylenmono- und -diaminen, aliphatischen und aromatischen Polycarbonsäuren mit 2 bis 60 Kohlenstoffatomen, und aliphatischen Polyolen.

14. Wäßrige, lösemittelarme Beschichtungsmittel nach Anspruch 1, dadurch gekennzeichnet, daß die Verbindungen (B-11) ausgewählt werden aus Polyoxyalkylen-Polyglykolen mit gewichtsmittleren molaren Massen von 600 bis 1200 g/mol.

15. Wäßrige, lösemittelarme Beschichtungsmittel nach Anspruch 1, dadurch gekennzeichnet, daß die Verbindungen (C-1) ausgewählt sind aus den Estern von α,β-olefinisch ungesättigten Carbonsäuren mit aliphatischen Alkoholen mit 1 bis 18 Kohlenstoffatomen, Vinylaromaten, Vinylestern und Vinylhalogeniden, α,β-olefinisch ungesättigten Carbonsäuren sowie deren Amiden und Nitrilen.

16. Wäßrige, lösemittelarme Beschichtungsmittel nach Anspruch 6, dadurch gekennzeichnet, daß die Verbindungen (C-2) ausgewählt sind aus niedermolekularen Äthern von Glycidylalkohol mit ein- und mehrwertigen Phenolen, alkylsubstituierten Phenolen und ein- und mehrwertigen aliphatischen verzweigten und unverzweigten Alkoholen und Estern von verzweigten oder unverzweigten aliphatischen Carbonsäuren mit 2 bis 40 Kohlenstoffatomen.

17. Wäßrige, lösemittelarme Beschichtungsmittel nach Anspruch 1, dadurch gekennzeichnet, daß die Härtungsmittel (II) ausgewählt sind aus Polyaminen, Mannich-Basen, Epoxid-Amin-Addukten mit freien Aminogruppen, Polyamidoaminen und latenten Härtungsmitteln.

18. Wäßrige, lösemittelarme Beschichtungsmittel nach Anspruch 17, dadurch gekennzeichnet, daß die latenten Härtungsmittel ausgewählt sind aus Harnstoff, Dicyandiamid, (substituiertem) Imidazol, (substituiertem) Imidazolin, Guanidin, Aceto- und Benzo-Guanamin.

19. Verfahren zur Herstellung der wäßrigen modifizierten Epoxidharzdispersion (I), dadurch gekennzeichnet, daß zunächst das Epoxidharz (A) durch Kondensation der Komponenten (A-1), (A-2) und gegebenenfalls (A-3) bei erhöhten Temperaturen in Gegenwart von Kondensationskatalysatoren hergestellt wird, anschließend bei tieferer Temperatur zumindest eine Teilmenge des Verdünnungsmittels (C) zugefügt wird und gegebenenfalls eine teilweise Reaktion der Monomeren (C-1) mit dem Epoxidharz (A) vollzogen wird, darauf das Dispergiermittel (B) einhomogenisiert wird und eine wäßrige Dispersion durch portionsweises Zudosieren von Wasser (D) erhalten wird, worauf man mit Hilfe eines geeigneten Initiatorsystems und gegebenenfalls unter Zugabe des restlichen Verdünnungsmittels (C) bei geeigneten Temperaturen die Monomeren (C-1) vollständig in eine Polymerdispersion überführt.

20. Wäßrige, lösemittelarme Beschichtungsmittel hergestellt nach dem Verfahren von Anspruch 19.

21. Beschichtungen, hergestellt mit einem Beschichtungsmittel nach Anspruch 1.

22. Matte Klarlacke, enthaltend wäßrige Dispersionen nach Anspruch 1.

23. Wasserverdünnbare Klebstoffe, enthaltend wäßrige Dispersionen nach Anspruch 1.
